# EUROPEAN PATENT APPLICATION

(11) **EP 4 799 888 A1**
(43) Date of publication of application: **02.09.2026**
(21) Application number: 25160279.3
(22) Date of filing: 26.02.2025
(51) Int. Cl.: B60W 30/14

(54) **A COMPUTER SYSTEM AND METHOD FOR CONTROLLING VEHICLE SPEED OF A VEHICLE TRAVELLING IN AN AREA, AND A VEHICLE**

(71) Applicant: Volvo Autonomous Solutions AB, 405 08 Göteborg (SE)
(72) Inventor: BERGQUIST, Stefan, 417 27 GÖTEBORG (SE); WIBERG, Wilhelm, 436 39 ASKIM (SE)
(74) Representative: Kransell & Wennborg KB

(57) **Abstract**

A computer system (600) is disclosed comprising processing circuitry (602) configured to control vehicle speed (v) of a first vehicle (1) travelling in an area (A), the processing circuitry (602) being configured to:
- obtain data about speed (v1, v2, v3, v4) of at least one movable object (MV1-MV4) in the area (A),
- obtain data about a maximum allowed relative speed (v_{max, rel}) between the first vehicle (1) and the at least one movable object (MV1-MV4),
- set a maximum allowed vehicle speed (vₘₐₓ) of the first vehicle (1) based on a difference between the maximum allowed relative speed (v_{max, rel}) and the speed (v1, v2, v3, v4) of the at least one movable object (MV1-MV4), and
- control the vehicle speed (v) of the first vehicle (1) based on the maximum allowed vehicle speed (vₘₐₓ) of the first vehicle (1). A vehicle and a method are also disclosed.

## Description

### TECHNICAL FIELD

The disclosure relates generally to vehicles. **In** particular aspects, the disclosure relates to a computer system comprising processing circuitry configured to control vehicle speed of a first vehicle travelling in an area, a computer-implemented method for controlling vehicle speed of a first vehicle travelling in an area, a computer program product, a non-transitory computer-readable storage medium, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles may be used for performing work tasks on work sites, e.g., in confined areas, such as mining sites, construction sites, harbors, etc. In recent years, vehicles with autonomous driving capabilities have been introduced for such sites and used for performing certain work tasks, such as moving goods from one point to another point in the area. A combination of autonomous vehicles and manually operated vehicles may operate in the area.

In view of the above, there is a strive to develop improved vehicle technology for areas where a plurality of vehicles is operating, such as technology which is safe and improves productivity and/or flexibility.

### SUMMARY

According to a first aspect of the disclosure, a computer system comprising processing circuitry configured to control vehicle speed of a first vehicle travelling in an area is provided. The processing circuitry is configured to:
- obtain data about speed of at least one movable object in the area,
- obtain data about a maximum allowed relative speed between the first vehicle and the at least one movable object,
- set a maximum allowed vehicle speed of the first vehicle based on a difference between the maximum allowed relative speed and the speed of the at least one movable object, and
- control the vehicle speed of the first vehicle based on the maximum allowed vehicle speed of the first vehicle.

The first aspect of the disclosure may seek to provide improved control of the first vehicle, e.g., such that productivity and/or flexibility is improved. The first aspect of the disclosure may additionally or alternatively seek to provide improved control of the first vehicle such that safety in the area improved. A technical benefit may include that the speed of the first vehicle is controlled based on a maximum allowed relative speed between the first vehicle and another movable object in the area. For example, it has been realized that by considering the speed of other movable objects in the area and the maximum allowed relative speed, productivity of the first vehicle may be increased by dynamically adapting the speed limit of the first vehicle. As another example, it has also been realized that by considering the speed of other movable objects in the area and the maximum allowed relative speed, operation of the at least one movable object may be more flexible and/or safer. Safety may be improved since the first vehicle may adapt its speed limit to the operation of the at least one movable object, in contrast to having a fixed speed limit for the at least one movable object which not always may be followed if it is a manually operated vehicle. Flexibility may be improved in the sense that the at least one movable object may increase its speed if deemed important for any reason and this will not cause a risk since the speed of the first vehicle can be adapted to the increased speed of the at least one movable object.

Optionally in some examples, including in at least one preferred example, the processing circuitry is configured to:
- obtain data about respective speeds of a plurality of movable objects in the area, and
- set the maximum allowed vehicle speed of the first vehicle based on a difference between the maximum allowed relative speed and a highest speed of the respective speeds of the plurality of movable objects.

A technical benefit may include that the control of the vehicle speed of the first vehicle is improved. This is since by considering the highest speed, the vehicle speed of the first vehicle may be better adapted to a situation when the first vehicle and the movable object with the highest speed meet or come close to each other in the area.

Optionally in some examples, including in at least one preferred example, the speed of the at least one movable object is any one of:
- an actual speed of the at least one movable object,
- a maximum speed of the at least one movable object, and
- a maximum allowed speed of the at least one movable object.

A technical benefit of considering an actual speed of the at least one movable object may include that the vehicle speed of the first vehicle may be dynamically adapted in response to variations of the actual speed. A technical benefit of considering a maximum speed of the at least one movable object may include that the vehicle speed of the first vehicle may be better adapted to a "worst-case" scenario when the first vehicle meets a movable object which is travelling at its maximum speed. A technical benefit of considering a maximum allowed speed of the at least one movable object may include that the vehicle speed of the first vehicle may be better adapted to a "worst-case" scenario when the first vehicle meets a movable object which is travelling at its maximum allowed speed.

Optionally in some examples, including in at least one preferred example, the processing circuitry is configured to set the maximum allowed relative speed between the first vehicle and the at least one movable object based on any one or a combination of:
- an obstacle detection capacity of an object detection sensor of the first vehicle,
- a braking capacity of the first vehicle,
- a braking capacity of the at least one movable object,
- a road condition of a travelling surface in the area,
- a road inclination of a travelling surface in the area,
- a weather condition in the area,
- a distance between the first vehicle and a nearest movable object of the at least one movable object,
- a position of the first vehicle in the area, and
- type of movable object(s) of the at least one movable object.

A technical benefit may include that the maximum allowed relative speed is better adapted to a current situation of the first vehicle so that the first vehicle can act timely to avoid a collision. For example, the maximum allowed relative speed may be set such that the first vehicle is able to act timely from a point in time when the object detection sensor detects the at least one a movable object, so that a collision can be avoided. In a similar manner, by considering braking capacity, road condition, road inclination, weather condition, distance, position, and/or type of movable object, the maximum allowed relative speed may be better adapted so that the first vehicle is able to act timely to avoid a collision.

Optionally in some examples, including in at least one preferred example, the maximum allowed vehicle speed of the first vehicle is continuously or intermittently updated based on any one or a combination of updated data about speed of the at least one movable object in the area and updated data about the maximum allowed relative speed between the first vehicle and the at least one movable object. A technical benefit may include that the maximum allowed vehicle speed is continuously or intermittently updated during operation of the first vehicle in response to varying conditions. This may result in improved productivity, flexibility, and/or safety.

Optionally in some examples, including in at least one preferred example, the processing circuitry is configured to update the maximum allowed relative speed between the first vehicle and the at least one movable object based on a change of any one of:
- an obstacle detection capacity of an object detection sensor of the first vehicle,
- a braking capacity of the first vehicle,
- a braking capacity of the at least one movable object,
- a road condition of the travelling surface in the area,
- a road inclination of a travelling surface in the area,
- a weather condition in the area,
- a distance between the first vehicle and the nearest movable object of the at least one movable object,
- a position of the first vehicle in the area, and
- type of movable object(s) of the at least one movable object.

A technical benefit may include that the maximum allowed vehicle speed of the first vehicle is continuously or intermittently updated during operation of the first vehicle in response to any one of the aforementioned varying conditions. This may result in improved productivity, flexibility, and/or safety.

Optionally in some examples, including in at least one preferred example, the area comprises a plurality of sub-areas, wherein the processing circuitry is configured to set the maximum allowed relative speed between the first vehicle and the at least one movable object based on in which sub-area the first vehicle is currently travelling. A technical benefit may include that the maximum allowed relative speed is set in dependence on different conditions of the sub-areas. For example, a risk of collision may be different between different sub-areas, and the maximum allowed relative speed may be set in dependence on the varying collision risk. As another example, some movable objects, e.g. vehicles, may only be operating in certain sub-areas. A vehicle used for loading the first vehicle may for example only operate within a defined sub-area. In such a case, the speed of the loading vehicle may only be considered in this sub-area, if no other movable objects are present therein.

Optionally in some examples, including in at least one preferred example, the processing circuitry is further configured to set the maximum allowed vehicle speed of the first vehicle based on at least one of a travelling direction of the first vehicle and a travelling direction of the at least one movable object. A technical benefit may include that the maximum allowed vehicle speed may be set to a higher value at least on some occasions, e.g., when it is determined that the first vehicle and the at least one movable object are not driving towards each other in opposing directions.

Optionally in some examples, including in at least one preferred example, the first vehicle is an autonomous vehicle. A technical benefit may include that productivity and/or flexibility is improved on a site where the autonomous vehicle is operating, while also ensuring high safety. An autonomous vehicle may be defined as a vehicle with autonomous driving capability, or with at least partially autonomous driving capability. Autonomous driving capability may be defined as driving without any direct human involvement for driving the vehicle.

Optionally in some examples, including in at least one preferred example, the at least one movable object is a second vehicle. The second vehicle may be a manually operated vehicle. A technical benefit may include that the flexibility for the second vehicle, e.g., the manually operated vehicle, in the area is improved. This is since it may allow the second vehicle to adjust its speed if required, without increasing the collision risk with the first vehicle. More specifically, in the event the second vehicle increases its speed, the first vehicle may decrease its speed.

Optionally in some examples, including in at least one preferred example, the processing circuitry is further configured to control the vehicle speed of the first vehicle so that the vehicle speed of the first vehicle is equal to or below the maximum allowed vehicle speed. A technical benefit may include that the first vehicle does not exceed the maximum allowed vehicle speed. Thereby, improved productivity and/or flexibility may be achieved, without compromising with safety in the area.

Optionally in some examples, including in at least one preferred example, the processing circuitry is further configured to:
- in response to determining that the area is free from the at least one movable object, set the maximum allowed vehicle speed of the first vehicle to the maximum allowed relative speed. A technical benefit may include that the first vehicle is allowed to be operated at a relatively high speed without compromising with safety. This may imply improved productivity for the first vehicle.

According to a second aspect of the disclosure, a computer-implemented method for controlling vehicle speed of a first vehicle travelling in an area is provided, the method comprising:
- obtaining, by processing circuitry of a computer system, data about speed of at least one movable object in the area,
- obtaining, by the processing circuitry, data about a maximum allowed relative speed between the first vehicle and the at least one movable object,
- setting, by the processing circuitry, a maximum allowed vehicle speed of the first vehicle based on a difference between the maximum allowed relative speed and the speed of the at least one movable object, and
- controlling, by the processing circuitry, the vehicle speed of the first vehicle based on the maximum allowed vehicle speed of the first vehicle.

The second aspect of the disclosure may seek to provide improved control of the first vehicle, e.g., such that productivity and/or flexibility is improved. The first aspect of the disclosure may additionally or alternatively seek to provide improved control of the first vehicle such that safety in the area improved. A technical benefit may include that the speed of the first vehicle is controlled based on a maximum allowed relative speed between the first vehicle and another movable object in the area. For example, it has been realized that by considering the speed of other movable objects in the area and the maximum allowed relative speed, productivity of the first vehicle may be increased by dynamically adapting the speed limit of the first vehicle. As another example, it has also been realized that by considering the speed of other movable objects in the area and the maximum allowed relative speed, operation of the at least one movable object may be more flexible and/or safer. Safety may be improved since the first vehicle may adapt its speed limit to the operation of the at least one movable object, in contrast to having a fixed speed limit for the at least one movable object which not always may be followed if it is a manually operated vehicle. Flexibility may be improved in the sense that the at least one movable object may increase its speed if deemed important for any reason and this will not cause a risk since the speed of the first vehicle can be adapted to the increased speed of the at least one movable object. Advantages and technical benefits of the second aspect of the disclosure are analogous to the advantages and technical benefits of the first aspect of the disclosure, and vice versa. It shall also be noted that any example of the second aspect of the disclosure is applicable to and combinable with any example of the first aspect of the disclosure, and vice versa.

Optionally in some examples, including in at least one preferred example, the method comprises:
- obtaining, by the processing circuitry, data about respective speeds of a plurality of movable objects in the area, and
- setting, by the processing circuitry, the maximum allowed vehicle speed of the first vehicle based on a difference between the maximum allowed relative speed and a highest speed of the respective speeds of the plurality of movable objects.

Optionally in some examples, including in at least one preferred example, the method comprises:
- setting, by the processing circuitry, the maximum allowed relative speed between the first vehicle and the at least one movable object based on any one or a combination of:
- an obstacle detection capacity of an object detection sensor of the first vehicle,
- a braking capacity of the first vehicle,
- a braking capacity of the at least one movable object,
- a road condition of a travelling surface in the area,
- a road inclination of a travelling surface in the area,
- a weather condition in the area,
- a distance between the first vehicle and a nearest movable object of the at least one movable object,
- a position of the first vehicle in the area, and
- type of movable object(s) of the at least one movable object.

Optionally in some examples, including in at least one preferred example, the maximum allowed vehicle speed of the first vehicle is continuously or intermittently updated based on any one or a combination of updated data about speed of the at least one movable object in the area and updated data about the maximum allowed relative speed between the first vehicle and the at least one movable object.

Optionally in some examples, including in at least one preferred example, the method comprises:
- updating, by the processing circuitry, the maximum allowed relative speed between the first vehicle and the at least one movable object based on a change of any one of:
- an obstacle detection capacity of the object detection sensor of the first vehicle,
- a braking capacity of the first vehicle,
- a braking capacity of the at least one movable object,
- a road condition of the travelling surface in the area,
- a road inclination of a travelling surface in the area,
- a weather condition in the area,
- a distance between the first vehicle and the nearest movable object of the at least one movable object,
- a position of the first vehicle in the area, and
- type of movable object(s) of the at least one movable object.

Optionally in some examples, including in at least one preferred example, the area comprises a plurality of sub-areas, and the method comprises setting, by the processing circuitry, the maximum allowed relative speed between the first vehicle and the at least one movable object based on in which sub-area the first vehicle is currently travelling.

Optionally in some examples, including in at least one preferred example, the method further comprises:
- setting, by the processing circuitry, the maximum allowed vehicle speed of the first vehicle based on at least one of a travelling direction of the first vehicle and a travelling direction of the at least one movable object.

Optionally in some examples, including in at least one preferred example, the method further comprising:
- controlling, by the processing circuitry, the vehicle speed of the first vehicle so that the vehicle speed of the first vehicle is equal to or below the maximum allowed vehicle speed.

Optionally in some examples, including in at least one preferred example, the method further comprises:
- in response to determining that the area is free from the at least one movable object, setting, by the processing circuitry, the maximum allowed vehicle speed of the first vehicle to the maximum allowed relative speed.

According to a third aspect of the disclosure, computer program product is provided comprising program code for performing, when executed by the processing circuitry, the method of any of the examples of the second aspect of the disclosure.

According to a fourth aspect of the disclosure, a non-transitory computer-readable storage medium is provided comprising instructions, which when executed by the processing circuitry, cause the processing circuitry to perform the method of any of the examples of the second aspect of the disclosure.

According to a fifth aspect of the disclosure, a vehicle is provided comprising a computer system according to any one of the examples of the first aspect of the disclosure. Accordingly, vehicle speed of the vehicle comprising the computer system may be controlled as disclosed herein when the vehicle is travelling in an area.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle in a side view according to an example.
**Fig. 2** is an exemplary scenario for a vehicle travelling in an area according to an example.
**Fig. 3** is an exemplary object detection sensor for a vehicle according to an example.
**Fig. 4** is an exemplary scenario for a vehicle travelling in an area according to an example.
**Fig. 5** is an exemplary flowchart of a computer-implemented method according to an example.
**Fig. 6** is another view of Fig. 2, according to an example.
**Fig. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to provide improved control of a vehicle, which in examples herein is denoted a first vehicle. For example, by the present disclosure, productivity and/or flexibility may be improved. The present disclosure may additionally or alternatively seek to provide improved control of the first vehicle such that safety in the area improved.

By way of example, in some areas, such as confined or restricted areas comprising autonomous vehicles, a mix of autonomous vehicles and manually operated vehicles may be operating. In such areas it is important to ensure that the autonomous vehicles do not collide with the manually operated vehicles. This may be done by e.g. placing physical barriers between the autonomous vehicles and the manually operated vehicles, using position based geofencing to avoid that the vehicles drive in the same areas at the same time, and/or by onboard sensor-based collision avoidance systems. Onboard sensor-based collision avoidance systems often have a limitation on how well they work, in what speeds they can be used, etc. This originates from different technical and/or environmental aspects, which result in limited obstacle detection range. Obstacle detection range may for example be limited due to technical limitations and/or environmental conditions, such as depending on current weather conditions. By way of example, object detection range may vary depending on inclination of the travelling surface, where e.g. in a downhill section the object detection sensor may be occluded by the flat ground where the downhill ends. Walls, barriers, berms, tunnels, etc., may additionally or alternatively affect the object detection range. An object detection sensor typically has a range from meters to hundreds of meters. However, when used for autonomous safety systems, they tend to have rather short range to ensure high certainty for obstacle detection.

For this reason, the speed for vehicles on a site or in an area could be limited based on the maximum speed that a sensor-based collision avoidance system can work in. Typically, the maximum speed is set so that the vehicle with the sensor-based collision avoidance system can safely stop without colliding with an object detected by the sensor. In this respect it has been realized that it is the relative speed between the vehicles that is important. For example, if it is assumed that the speed of an autonomous vehicle is 20 km/h, the detection range would have to be longer for the autonomous vehicle to stop for a manual vehicle travelling in the opposing direction in 20 km/h compared to standing still. This may be handled by setting fixed speed limits for the vehicles travelling in the area. For example, if a collision avoidance system works up to 20 km/h it might be split into 10 km/h for autonomous vehicles and 10 km/h for manually operated vehicles. However, this may pose a production limiting requirement on the autonomous vehicle since it needs to drive relatively slow independent of if there are manual vehicles present in the area and how they drive.

By examples of the present disclosure, the speed of the first vehicle is controlled based on a maximum allowed relative speed between the first vehicle and another movable object in the area. For example, it has been realized that by considering the speed of other movable objects in the area and the maximum allowed relative speed, productivity of the first vehicle may be increased by dynamically adapting the speed limit of the first vehicle. As another example, it has also been realized that by considering the speed of other movable objects in the area and the maximum allowed relative speed, operation of the at least one movable object may be more flexible and/or safer. Safety may be improved since the first vehicle may adapt its speed limit to the operation of the at least one movable object, in contrast to having a fixed speed limit for the at least one movable object which not always may be followed if it is a manually operated vehicle. Flexibility may be improved in the sense that the at least one movable object may increase its speed if deemed important for any reason and this will not cause a risk since the speed of the first vehicle can be adapted to the increased speed of the at least one movable object.

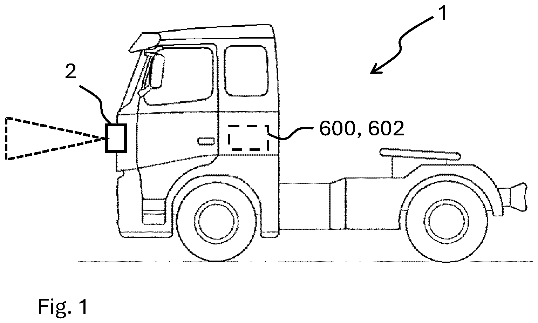

**FIG. 1** is an exemplary vehicle 1 in a side view according to an example. The vehicle 1 is in this example a truck, more particularly a tractor unit for towing one or more trailers (not shown). It shall however be understood that the disclosure is not limited to only this type of vehicle, but may be used in any other vehicle, such as a bus, a wheel loader, an excavator, a dump-truck, a passenger car and a marine vessel.

The vehicle 1 comprises an object detection sensor 2 and a computer system 600 according to examples disclosed herein. The computer system 600 comprises processing circuitry 602. The vehicle 1 is in this example the first vehicle as disclosed herein and is preferably an autonomous vehicle which use the aforementioned object detection sensor 2 for collision avoidance during travelling.

The object detection sensor 2 may be any type of sensor, or combination of sensors, configured to be used in an autonomous driving system of the vehicle 1, or any other advanced driver assistance system (ADAS) of the vehicle 1, i.e., for collision avoidance.

By way of example, the object detection sensor 2 may be any one of a LIDAR (Light Detection and Ranging) sensor, a RADAR (Radio Detection and Ranging) sensor, a SONAR (Sound Navigation and Ranging) sensor, an ultrasonic sensor, a camera, or any other type of object detection sensor.

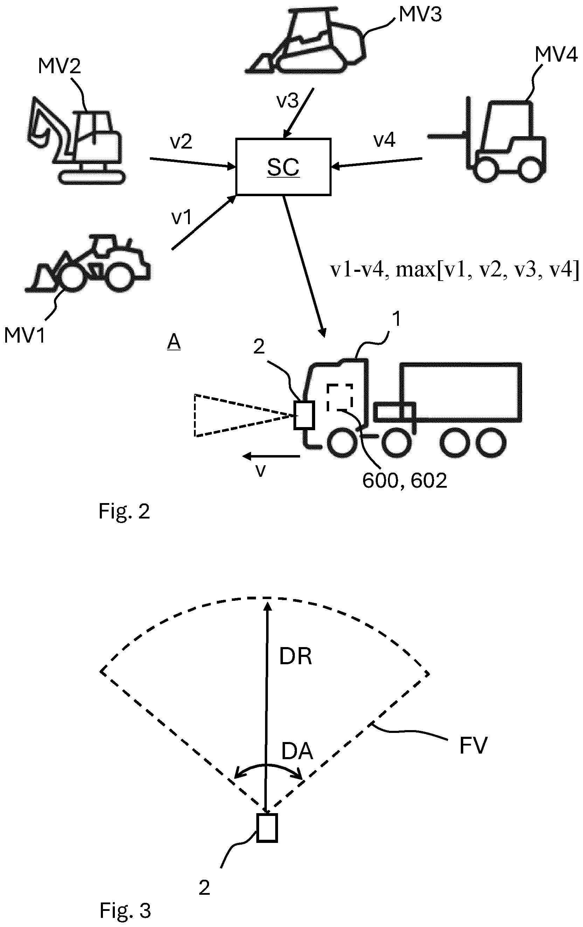

**Fig. 2** is an exemplary scenario in schematic view for a vehicle 1 travelling in an area A according to an example. For example, the vehicle 1 may be the vehicle 1 shown in Fig. 1. The area A may be any type of area in which vehicles are operating, such as a confined or restricted area A having at least one autonomous vehicle 1 and one or more manually operated vehicles MV1, MV2, MV3, MV4. For example, the area A may be a mining site, a construction site, a harbor, a logistics center, etc.

The area A may also as shown utilize at least one site control system SC. The site control system SC may be configured to receive data from vehicles operating in the area A, such as speed data v1, v2, v3, v4. The site control system SC may also be configured to issue control instructions to one or more vehicles in the area A, such as instructions to perform certain work tasks, e.g., to drive from one point to another in the area A, to carry a load from one point to another in the area A, to load a vehicle with a load, to pick up a load, etc. Data communication between the vehicles and the site control system SC may be wireless. The site control system SC may also be configured to provide any other type of data to one or more vehicles in the area A, such as vehicle speed related data. The site control system SC is typically a computer system comprising processing circuitry configured to perform at least one of the aforementioned tasks.

With reference to e.g. Fig. 1 and Fig. 2, a computer system 600 is depicted comprising processing circuitry 602 configured to control vehicle speed v of a first vehicle 1 travelling in an area A.

The processing circuitry 602 is configured to obtain data about speed v1, v2, v3, v4 of at least one movable object MV1-MV4 in the area A. In the example shown in Fig. 2, the speed data v1-v4 may be provided from the at least one movable object MV1-MV4 to the site control system SC, and then from the site control system SC to the first vehicle 1, as indicated by the arrows. However, it shall be noted that in other examples the speed data v1-v4 may be provided directly to the first vehicle 1 from the at least one movable object MV1-MV4. In yet further examples, as an alternative or as a complement, the speed data v1-v4 may be obtained from other sources, e.g., by a camera surveillance system (not shown) of the area A, satellite surveillance system (not shown) of the area A, etc. In this example, there are four movable objects MV1-MV4, except the first vehicle 1. The four movable objects MV1-MV4 are in this example manually operated vehicles. In other examples, the movable objects may be a combination of different types of vehicles, such as a combination of manual and autonomous vehicles. Any one of the four movable objects MV1-MV4 may be denoted a second vehicle as disclosed herein. By way of example, the speed (e.g. actual speed) of the movable object MV1 may be 10 km/h, the speed (e.g. actual speed) of the movable object MV2 may be 5 km/h, the speed (e.g. actual speed) of the movable object MV3 may be 5 km/h, and the speed (e.g. actual speed) of the movable object MV4 may be 7 km/h,

The processing circuitry 602 is further configured to obtain data about a maximum allowed relative speed v_{max, rel} between the first vehicle 1 and the at least one movable object MV1-MV4. A relative speed as disclosed herein may be defined as a relative speed of two objects, such as a relative speed of two objects which are moving towards each other, e.g., in opposite directions towards each other.

The processing circuitry 602 is further configured set a maximum allowed vehicle speed vₘₐₓ of the first vehicle 1 based on a difference between the maximum allowed relative speed v_{max, rel} and the speed v1, v2, v3, v4 of the at least one movable object MV1-MV4. In this example, respective speeds v1-v4 have been obtained for the respective movable object MV1-MV4. Hence, by way of example, the processing circuitry 602 may be configured to set the maximum allowed vehicle speed vₘₐₓ of the first vehicle 1 based on a difference between the maximum allowed relative speed v_{max, rel} and a highest speed max[v1, v2, v3, v4] of the respective speeds v1, v2, v3, v4 of the plurality of movable objects MV1-MV4. Accordingly, if the maximum allowed relative speed v_{max, rel} is 20 km/h and the highest speed is 10 km/h (i.e., of MV1), the processing circuitry 602 may be configured set the maximum allowed vehicle speed vₘₐₓ of the first vehicle 1 to 10 km/h, i.e., 20 km/h minus 10 km/h.

As shown in Fig. 2, the respective speeds v1-v4 may be provided from the site control system SC to the first vehicle 1. Alternatively, as another example shown in FIG. 2, the highest speed max[v1, v2, v3, v4] of the respective speeds v1, v2, v3, v4 of the plurality of movable objects MV1-MV4 may be provided to the first vehicle 1 from the site control system SC.

The processing circuitry 602 is further configured to control the vehicle speed v of the first vehicle 1 based on the maximum allowed vehicle speed vₘₐₓ of the first vehicle 1. For example, the processing circuitry 602 may be configured to control the vehicle speed v of the first vehicle 1 so that the vehicle speed v of the first vehicle 1 is equal to or below the maximum allowed vehicle speed vₘₐₓ when the first vehicle 1 is travelling in the area A, i.e., so that the maximum allowed vehicle speed vₘₐₓ is not exceeded when the first vehicle 1 is travelling in the area A. In some examples, the computer system 600 may be part of an autonomous driving system of the first vehicle 1. In some examples, the computer system may be remote from the first vehicle 1, such as part of the site control system SC.

The speed of the at least one movable object MV1-MV4 may be any one of:
- an actual speed of the at least one movable object MV1-MV4,
- a maximum speed of the at least one movable object MV1-MV4, and
- a maximum allowed speed of the at least one movable object MV1-MV4.

The processing circuitry 602 may be configured to set the maximum allowed relative speed v_{max, rel} between the first vehicle 1 and the at least one movable object MV1-MV4 based on any one or a combination of:
- an obstacle detection capacity of an object detection sensor 2 of the first vehicle 1,
- a braking capacity of the first vehicle 1,
- a braking capacity of the at least one movable object MV1-MV4,
- a road condition of a travelling surface in the area A,
- a road inclination of a travelling surface in the area A,
- a weather condition in the area A,
- a distance between the first vehicle 1 and a nearest movable object MV1-MV4 of the at least one movable object MV1-MV4,
- a position of the first vehicle 1 in the area A, and
- type of movable object(s) of the at least one movable object MV1-MV4.

In other words, the maximum allowed relative speed v_{max, rel} may be obtained by setting the maximum allowed relative speed v_{max, rel} based on any one or a combination of the aforementioned factors.

Fig. 3 depicts an exemplary object detection sensor 2 for a vehicle 1 according to an example. The object detection sensor 2 in Fig. 3 may be the object detection sensor 2 shown in any one of Fig. 1 or Fig. 2. In the example shown in Fig. 3, the object detection sensor 2 has an obstacle detection capacity. The obstacle detection capacity may be defined as a maximum sensor field of view FV of the object detection sensor 2 in which the object detection sensor 2 can detect an obstacle with a certain level of confidence, or certainty. The obstacle detection capacity may vary depending on technical and/or environmental conditions, as e.g. mentioned in the above. The level of confidence may be set to a predefined value, such as a value corresponding to a 90-100 % level of confidence, such as above 95-99 % level of confidence. As shown, the field of view may be defined by a detection range DR, or maximum detection range DR, of the object detection sensor 2. Additionally, as an example, the field of view FV may also be defined by a detection angle range DA, or maximum detection angle range DA, i.e., an angle range in which the object detection sensor 2 can detect an obstacle, such as the herein at least one movable object MV1-MV4.

By way of example, the maximum allowed relative speed v_{max, rel} between the first vehicle 1 and the at least one movable object MV1-MV4 may be set based on the obstacle detection capacity shown in Fig. 3. For example, the maximum allowed relative speed v_{max, rel} may be set so that the first vehicle 1, when driving at the maximum allowed vehicle speed vₘₐₓ, can act timely to avoid a collision with any one of the movable objects MV1-MV4 in the area A. Accordingly, if a movable object MV1-MV4 is detected at the maximum detection range DR, the first vehicle 1 is able to stop in time so that a collision is avoided.

A braking capacity may herein mean a capacity to brake a movable object to standstill, i.e., to zero speed. In some examples, the braking capacity may be defined by a braking distance, e.g., a distance to stop a vehicle when driving at a certain speed. Accordingly, by additionally or alternatively considering a braking capacity, the maximum allowed relative speed v_{max, rel} may be set so that the first vehicle 1, when driving at the maximum allowed vehicle speed v_{max,} can act timely to avoid a collision with any one of the movable objects MV1-MV4 in the area A.

A road condition may additionally or alternatively be used to set the maximum allowed relative speed v_{max, rel}. For example, the road condition may be defined by a friction coefficient of the travelling surface. For example, an asphalt road may have a higher friction coefficient than a gravel road. Hence, a road with a lower friction coefficient may result in a lower maximum allowed relative speed v_{max, rel} and a road with a higher friction coefficient may result in a higher maximum allowed relative speed v_{max, rel}.

A road inclination may additionally or alternatively be used to set the maximum allowed relative speed v_{max, rel}. For example, a large inclination of a road may result in a lower maximum allowed relative speed v_{max, rel} and a road with a smaller inclination, or no inclination, may result in a higher maximum allowed relative speed v_{max, rel}. By way of example, a downhill inclination may typically be assumed to require a longer stopping distance, and thereby the maximum allowed relative speed v_{max, rel} may be set to a lower value when the downhill inclination is increased.

A weather condition may additionally or alternatively be used to set the maximum allowed relative speed v_{max, rel}. For example, a weather condition indicative of bad visibility may result in a lower maximum allowed relative speed v_{max, rel} and a weather condition indicative of good visibility may result in a higher maximum allowed relative speed v_{max, rel}.

A distance between the first vehicle 1 and a nearest movable object MV1-MV4 may additionally or alternatively be used to set the maximum allowed relative speed v_{max, rel}. For example, a relatively short distance may result in a lower maximum allowed relative speed v_{max, rel} and a relatively long distance may result in a higher maximum allowed relative speed v_{max,} rel.

A position of the first vehicle 1 in the area A may additionally or alternatively be used to set the maximum allowed relative speed v_{max, rel}. For example, a position in the area A which is indicative of bad visibility, such as caused by obstacles or occlusions, may result in a lower maximum allowed relative speed v_{max, rel} and a position in the area A which is indicative of good visibility may result in a higher maximum allowed relative speed v_{max, rel}.

The type of movable object(s) of the at least one movable object MV1-MV4 may additionally or alternatively be used to set the maximum allowed relative speed v_{max, rel}. For example, a relatively small object, i.e., an object which can be detected at a relatively short detection range, may result in a lower maximum allowed relative speed v_{max, rel} and a relatively large object, i.e., an object which can be detected at a relatively long detection range, may result in a higher maximum allowed relative speed v_{max, rel}.

In some examples, the maximum allowed vehicle speed vₘₐₓ of the first vehicle 1 may be continuously or intermittently updated based on any one or a combination of updated data about speed v1, v2, v3, v4 of the at least one movable object MV1-MV4 in the area A and updated data about the maximum allowed relative speed v_{max, rel} between the first vehicle 1 and the at least one movable object MV1-MV4. Accordingly, the maximum allowed vehicle speed vₘₐₓ of the first vehicle 1 may be continuously or intermittently updated by setting the maximum allowed vehicle speed vₘₐₓ of the first vehicle 1 based on a difference between the (updated) maximum allowed relative speed v_{max, rel} and the (updated) speed v1, v2, v3, v4 of the at least one movable object MV1-MV4.

For example, the processing circuitry 602 may be configured to update the maximum allowed relative speed v_{max, rel} between the first vehicle 1 and the at least one movable object MV1-MV4 based on a change of any one of:
- an obstacle detection capacity of an object detection sensor 2 of the first vehicle 1,
- a braking capacity of the first vehicle 1,
- a braking capacity of the at least one movable object MV1-MV4,
- a road condition of the travelling surface in the area A,
- a road inclination of a travelling surface in the area A,
- a weather condition in the area A,
- a distance between the first vehicle 1 and the nearest movable object MV1-MV4 of the at least one movable object MV1-MV4,
- a position of the first vehicle 1 in the area A, and
- type of movable object(s) of the at least one movable object MV1-MV4.

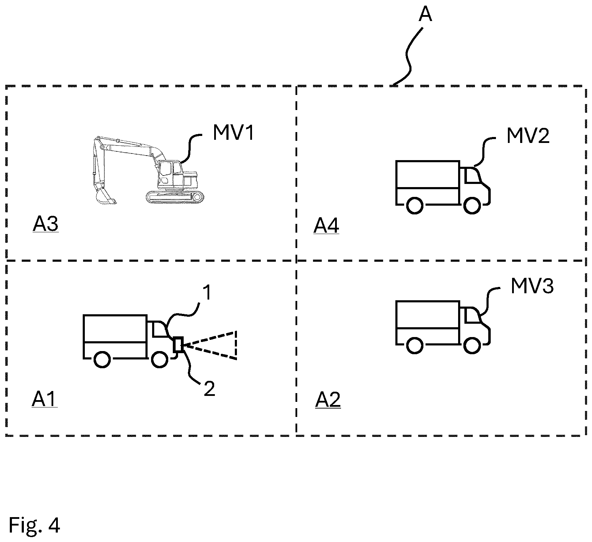

**Fig. 4** depicts an exemplary scenario in schematic view for a vehicle 1, i.e. a first vehicle 1 as disclosed herein, travelling in an area A according to an example. In the shown example, the area A comprises four sub-areas A1, A2, A3, A4. A sub-area may for example be defined based on different factors, such as if the sub-area comprises a loading/unloading spot or a road section. The sub-areas may additionally or alternatively be defined based on if a road section therein is a one-way road section or a two-way road section. In some examples. the sub-areas may be defined based on a risk factor for e.g. colliding with another object. The sub-areas may be delimited by use of position based geofencing and/or by physical barriers in the area A.

The processing circuitry 602 may be configured to set the maximum allowed relative speed v_{max, rel} between the first vehicle 1 and the at least one movable object MV1-MV4 based on in which sub-area A1-A4 the first vehicle 1 is currently travelling. For example, one sub-area which is indicative of a relatively high risk for colliding may result in a lower maximum allowed relative speed v_{max, rel} in said sub-area and another sub-area which is indicative of a relatively low risk for colliding may result in a higher maximum allowed relative speed v_{max, rel} in said other sub-area.

In some examples, the processing circuitry 602 may further be configured to set the maximum allowed vehicle speed vₘₐₓ of the first vehicle 1 based on at least one of a travelling direction of the first vehicle 1 and a travelling direction of the at least one movable object MV1-MV4. For example, if it is determined that the first vehicle 1 and the at least one movable object MV1-MV4 are not driving in opposing directions, a higher maximum allowed vehicle speed vₘₐₓ may be allowed. In some examples, speed of the at least one movable object directly towards the first vehicle 1 is considered for setting the maximum allowed vehicle speed vₘₐₓ of the first vehicle 1. This may be obtained by use of the aforementioned travelling direction information.

In some examples, the processing circuitry 602 may be configured to: in response to determining that the area A is free from the at least one movable object MV1-MV4, set the maximum allowed vehicle speed vₘₐₓ of the first vehicle 1 to the maximum allowed relative speed v_{max,} rel.

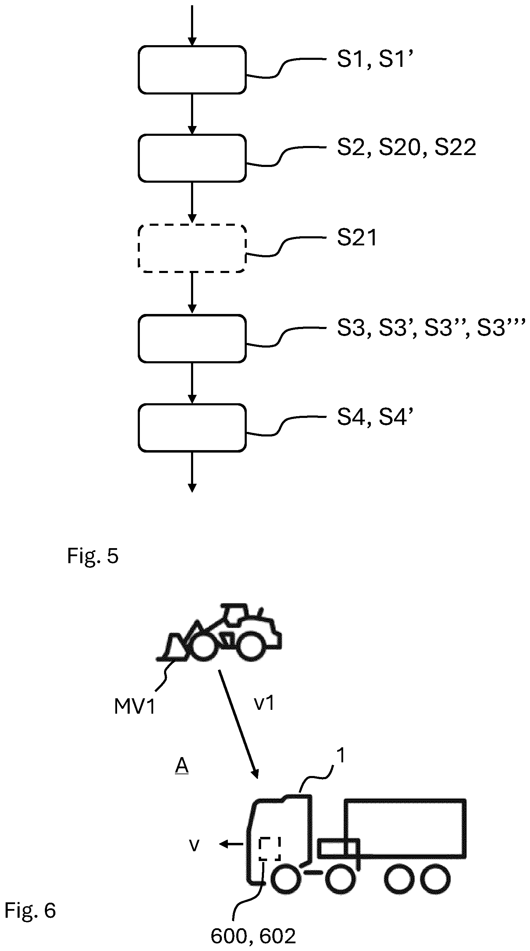

**Fig. 5** is an exemplary flowchart of a computer-implemented method for controlling vehicle speed v of a first vehicle 1 travelling in an area A according to an example.

The method comprises:
S1: obtaining, by processing circuitry 602 of a computer system 600, data about speed v1, v2, v3, v4 of at least one movable object MV1-MV4 in the area A,
S2: obtaining, by the processing circuitry 602, data about a maximum allowed relative speed v_{max, rel} between the first vehicle 1 and the at least one movable object MV1-MV4,
S3: setting S3, by the processing circuitry 602, a maximum allowed vehicle speed vₘₐₓ of the first vehicle 1 based on a difference between the maximum allowed relative speed v_{max, rel} and the speed v1, v2, v3, v4 of the at least one movable object MV1-MV4, and
S4: controlling S4, by the processing circuitry 602, the vehicle speed v of the first vehicle 1 based on the maximum allowed vehicle speed vₘₐₓ of the first vehicle 1.

The method may comprise:
S1': obtaining, by the processing circuitry 602, data about respective speeds v1, v2, v3, v4 of a plurality of movable objects MV1-MV4 in the area A, and
S3': setting, by the processing circuitry 602, the maximum allowed vehicle speed vₘₐₓ of the first vehicle 1 based on a difference between the maximum allowed relative speed v_{max, rel} and
a highest speed max[v1, v2, v3, v4] of the respective speeds v1, v2, v3, v4 of the plurality of movable objects MV1-MV4.

The method may comprise:
S20: setting, by the processing circuitry 602, the maximum allowed relative speed v_{max, rel} between the first vehicle 1 and the at least one movable object MV1-MV4 based on any one or a combination of:
- an obstacle detection capacity of an object detection sensor 2 of the first vehicle 1,
- a braking capacity of the first vehicle 1,
- a braking capacity of the at least one movable object MV1-MV4,
- a road condition of a travelling surface in the area A,
- a road inclination of a travelling surface in the area A,
- a weather condition in the area A,
- a distance between the first vehicle 1 and a nearest movable object MV1-MV4 of the at least one movable object MV1-MV4,
- a position of the first vehicle 1 in the area A, and
- type of movable object(s) of the at least one movable object MV1-MV4.

The maximum allowed vehicle speed vₘₐₓ of the first vehicle 1 may be continuously or intermittently updated based on any one or a combination of updated data about speed v1, v2, v3, v4 of the at least one movable object MV1-MV4 in the area A and updated data about the maximum allowed relative speed v_{max, rel} between the first vehicle 1 and the at least one movable object MV1-MV4.

In some examples, the method may comprise (indicated by a box with dashed lines):
S21: updating, by the processing circuitry 602, the maximum allowed relative speed v_{max, rel} between the first vehicle 1 and the at least one movable object MV1-MV4 based on a change of any one of:
- an obstacle detection capacity of the object detection sensor 2 of the first vehicle 1,
- a braking capacity of the first vehicle 1,
- a braking capacity of the at least one movable object MV1-MV4,
- a road condition of the travelling surface in the area A,
- a road inclination of a travelling surface in the area A,
- a weather condition in the area A,
- a distance between the first vehicle 1 and the nearest movable object MV1-MV4 of the at least one movable object MV1-MV4,
- a position of the first vehicle in the area A, and
- type of movable object(s) of the at least one movable object MV1-MV4.

In some examples, the area A may comprise a plurality of sub-areas A1-A4, and the method may comprise setting S22, by the processing circuitry 602, the maximum allowed relative speed v_{max, rel} between the first vehicle 1 and the at least one movable object MV1-MV4 based on in which sub-area A1-A4 the first vehicle 1 is currently travelling.

In some examples, the method may comprise:
S3": setting, by the processing circuitry 602, the maximum allowed vehicle speed vₘₐₓ of the first vehicle 1 based on at least one of a travelling direction of the first vehicle 1 and a travelling direction of the at least one movable object MV1-MV4.

In some examples, the method may comprise:
S4': controlling, by the processing circuitry 602, the vehicle speed v of the first vehicle 1 so that the vehicle speed v of the first vehicle 1 is equal to or below the maximum allowed vehicle speed vₘₐₓ.

In some examples, the method may comprise: in response to determining that the area A is free from the at least one movable object MV1-MV4, setting S3"', by the processing circuitry 602, the maximum allowed vehicle speed vₘₐₓ of the first vehicle 1 to the maximum allowed relative speed v_{max, rel}.

FIG. 6 is another view of FIG. 2, according to an example. It depicts a computer system 600 comprising processing circuitry 602 configured to control vehicle speed v of a first vehicle 1 travelling in an area A, the processing circuitry 602 being configured to:
- obtain data about speed v1 of at least one movable object MV1 in the area A,
- obtain data about a maximum allowed relative speed v_{max, rel} between the first vehicle 1 and the at least one movable object MV1,
- set a maximum allowed vehicle speed vₘₐₓ of the first vehicle 1 based on a difference between the maximum allowed relative speed v_{max, rel} and the speed v1, v2, v3, v4 of the at least one movable object MV1-MV4, and
- control the vehicle speed v of the first vehicle 1 based on the maximum allowed vehicle speed vₘₐₓ of the first vehicle 1.

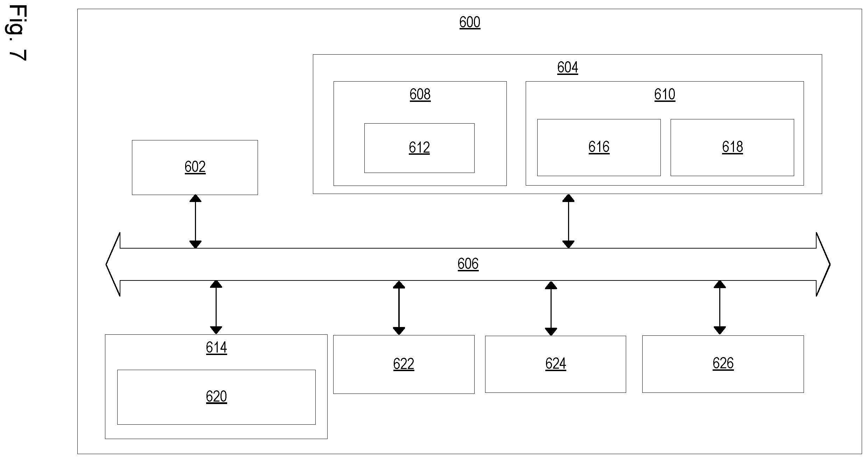

**FIG. 7** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the below, possible features and feature combinations of the present disclosure are presented as a list of Examples:

Example 1: A computer system (600) comprising processing circuitry (602) configured to control vehicle speed (v) of a first vehicle (1) travelling in an area (A), the processing circuitry (602) being configured to:
- obtain data about speed (v1, v2, v3, v4) of at least one movable object (MV1-MV4) in the area (A),
- obtain data about a maximum allowed relative speed (v_{max, rel}) between the first vehicle (1) and the at least one movable object (MV1-MV4),
- set a maximum allowed vehicle speed (vₘₐₓ) of the first vehicle (1) based on a difference between the maximum allowed relative speed (v_{max, rel}) and the speed (v1, v2, v3, v4) of the at least one movable object (MV1-MV4), and
- control the vehicle speed (v) of the first vehicle (1) based on the maximum allowed vehicle speed (vₘₐₓ) of the first vehicle (1).

Example 2: The computer system (600) according to Example 1, wherein the processing circuitry (602) is configured to:
- obtain data about respective speeds (v1, v2, v3, v4) of a plurality of movable objects (MV1-MV4) in the area (A), and
- set the maximum allowed vehicle speed (vₘₐₓ) of the first vehicle (1) based on a difference between the maximum allowed relative speed (v_{max, rel}) and a highest speed (max[v1, v2, v3, v4]) of the respective speeds (v1, v2, v3, v4) of the plurality of movable objects (MV1-MV4).

Example 3: The computer system (600) according to any one of the preceding Examples, wherein the speed of the at least one movable object (MV1-MV4) is any one of:
- an actual speed of the at least one movable object (MV1-MV4),
- a maximum speed of the at least one movable object (MV1-MV4), and
- a maximum allowed speed of the at least one movable object (MV1-MV4).

Example 4: The computer system (600) according to any one of the preceding Examples, wherein the processing circuitry (602) is configured to set the maximum allowed relative speed (v_{max, rel}) between the first vehicle (1) and the at least one movable object (MV1-MV4) based on any one or a combination of:
- an obstacle detection capacity of an object detection sensor (2) of the first vehicle (1),
- a braking capacity of the first vehicle (1),
- a braking capacity of the at least one movable object (MV1-MV4),
- a road condition of a travelling surface in the area (A),
- a road inclination of a travelling surface in the area (A),
- a weather condition in the area (A),
- a distance between the first vehicle (1) and a nearest movable object (MV1-MV4) of the at least one movable object (MV1-MV4),
- a position of the first vehicle (1) in the area (A), and
- type of movable object(s) of the at least one movable object (MV1-MV4).

Example 5: The computer system (600) according to any one of the preceding Examples, wherein the maximum allowed vehicle speed (vₘₐₓ) of the first vehicle (1) is continuously or intermittently updated based on any one or a combination of updated data about speed (v1, v2, v3, v4) of the at least one movable object (MV1-MV4) in the area (A) and updated data about the maximum allowed relative speed (v_{max, rel}) between the first vehicle (1) and the at least one movable object (MV1-MV4).

Example 6: The computer system (600) according to Example 5, wherein the processing circuitry (602) is configured to update the maximum allowed relative speed (v_{max, rel}) between the first vehicle (1) and the at least one movable object (MV1-MV4) based on a change of any one of:
- an obstacle detection capacity of an object detection sensor (2) of the first vehicle (1),
- a braking capacity of the first vehicle (1),
- a braking capacity of the at least one movable object (MV1-MV4),
- a road condition of the travelling surface in the area (A),
- a road inclination of a travelling surface in the area (A),
- a weather condition in the area (A),
- a distance between the first vehicle (1) and the nearest movable object (MV1-MV4) of the at least one movable object (MV1-MV4),
- a position of the first vehicle (1) in the area (A), and
- type of movable object(s) of the at least one movable object (MV1-MV4).

Example 7: The computer system (600) according to any one of the preceding Examples, wherein the area (A) comprises a plurality of sub-areas (A1-A4), and wherein the processing circuitry (602) is configured to set the maximum allowed relative speed (v_{max, rel}) between the first vehicle (1) and the at least one movable object (MV1-MV4) based on in which sub-area (A1-A4) the first vehicle (1) is currently travelling.

Example 8: The computer system (600) according to any one of the preceding Examples, wherein the processing circuitry (602) is further configured to set the maximum allowed vehicle speed (vₘₐₓ) of the first vehicle (1) based on at least one of a travelling direction of the first vehicle (1) and a travelling direction of the at least one movable object (MV1-MV4).

Example 9: The computer system (600) according to any one of the preceding Examples, wherein the first vehicle (1) is an autonomous vehicle.

Example 10: The computer system (600) according to any one of the preceding Examples, wherein the at least one movable object (MV1-MV4) is a second vehicle.

Example 11: The computer system (600) according to any one of the preceding Examples, wherein the processing circuitry (602) is further configured to control the vehicle speed (v) of the first vehicle (1) so that the vehicle speed (v) of the first vehicle (1) is equal to or below the maximum allowed vehicle speed (vₘₐₓ).

Example 12: The computer system (600) according to any one of the preceding Examples, wherein the processing circuitry (602) is further configured to:
- in response to determining that the area (A) is free from the at least one movable object (MV1-MV4), set the maximum allowed vehicle speed (vₘₐₓ) of the first vehicle (1) to the maximum allowed relative speed (v_{max, rel}).

Example 13: A computer-implemented method for controlling vehicle speed (v) of a first vehicle (1) travelling in an area (A), comprising:
- obtaining (S1), by processing circuitry (602) of a computer system (600), data about speed (v1, v2, v3, v4) of at least one movable object (MV1-MV4) in the area (A),
- obtaining (S2), by the processing circuitry (602), data about a maximum allowed relative speed (v_{max, rel}) between the first vehicle (1) and the at least one movable object (MV1-MV4),
- setting (S3), by the processing circuitry (602), a maximum allowed vehicle speed (vₘₐₓ) of the first vehicle (1) based on a difference between the maximum allowed relative speed (v_{max, rel}) and the speed (v1, v2, v3, v4) of the at least one movable object (MV1-MV4), and
- controlling (S4), by the processing circuitry (602), the vehicle speed (v) of the first vehicle (1) based on the maximum allowed vehicle speed (vₘₐₓ) of the first vehicle (1).

Example 14: The method according to Example 13, comprising:
- obtaining (S1'), by the processing circuitry (602), data about respective speeds (v1, v2, v3, v4) of a plurality of movable objects (MV1-MV4) in the area (A), and
- setting (S3'), by the processing circuitry (602), the maximum allowed vehicle speed (vₘₐₓ) of the first vehicle (1) based on a difference between the maximum allowed relative speed (v_{max, rel}) and a highest speed (max[v1, v2, v3, v4]) of the respective speeds (v1, v2, v3, v4) of the plurality of movable objects (MV1-MV4).

Example 15: The method according to any one of Examples 13-14, comprising:
- setting (S20), by the processing circuitry (602), the maximum allowed relative speed (v_{max, rel}) between the first vehicle (1) and the at least one movable object (MV1-MV4) based on any one or a combination of:
   - an obstacle detection capacity of an object detection sensor (2) of the first vehicle (1),
   - a braking capacity of the first vehicle (1),
   - a braking capacity of the at least one movable object (MV1-MV4),
   - a road condition of a travelling surface in the area (A),
   - a road inclination of a travelling surface in the area (A),
   - a weather condition in the area (A),
   - a distance between the first vehicle (1) and a nearest movable object (MV1-MV4) of the at least one movable object (MV1-MV4),
   - a position of the first vehicle (1) in the area (A), and
   - type of movable object(s) of the at least one movable object (MV1-MV4).

Example 16: The method according to any one of Examples 13-15, wherein the maximum allowed vehicle speed (vₘₐₓ) of the first vehicle (1) is continuously or intermittently updated based on any one or a combination of updated data about speed (v1, v2, v3, v4) of the at least one movable object (MV1-MV4) in the area (A) and updated data about the maximum allowed relative speed (v_{max, rel}) between the first vehicle (1) and the at least one movable object (MV1-MV4).

Example 17: The method according to Example 16, comprising:
- updating (S21), by the processing circuitry (602), the maximum allowed relative speed (v_{max, rel}) between the first vehicle (1) and the at least one movable object (MV1-MV4) based on a change of any one of:
   - an obstacle detection capacity of the object detection sensor (2) of the first vehicle (1),
   - a braking capacity of the first vehicle (1),
   - a braking capacity of the at least one movable object (MV1-MV4),
   - a road condition of the travelling surface in the area (A),
   - a road inclination of a travelling surface in the area (A),
   - a weather condition in the area (A),
   - a distance between the first vehicle (1) and the nearest movable object (MV1-MV4) of the at least one movable object (MV1-MV4),
   - a position of the first vehicle in the area (A), and
   - type of movable object(s) of the at least one movable object (MV1-MV4).

Example 18: The method according to any one of Examples 13-17, wherein the area (A) comprises a plurality of sub-areas (A1-A4), and wherein the method comprises setting (S22), by the processing circuitry (602), the maximum allowed relative speed (v_{max, rel}) between the first vehicle (1) and the at least one movable object (MV1-MV4) based on in which sub-area (A1-A4) the first vehicle (1) is currently travelling.

Example 19: The method according to any one of Examples 13-18, further comprising:
- setting (S3"), by the processing circuitry (602), the maximum allowed vehicle speed (vₘₐₓ) of the first vehicle (1) based on at least one of a travelling direction of the first vehicle (1) and a travelling direction of the at least one movable object (MV1-MV4).

Example 20: The method according to any one of Examples 13-19, further comprising:
- controlling (S4'), by the processing circuitry (602), the vehicle speed (v) of the first vehicle (1) so that the vehicle speed (v) of the first vehicle (1) is equal to or below the maximum allowed vehicle speed (vₘₐₓ).

Example 21: The method according to any one of Examples 13-20, further comprising:
- in response to determining that the area (A) is free from the at least one movable object (MV1-MV4), setting (S3‴), by the processing circuitry (602), the maximum allowed vehicle speed (vₘₐₓ) of the first vehicle (1) to the maximum allowed relative speed (v_{max, rel}).

Example 22: A computer program product comprising program code for performing, when executed by the processing circuitry (602), the method of any of Examples 13-21.

Example 23: A non-transitory computer-readable storage medium comprising instructions, which when executed by the processing circuitry (602), cause the processing circuitry to perform the method of any of Examples 13-21.

Example 24: A vehicle (1) comprising a computer system (600) according to any one of Examples 1-12.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to control vehicle speed (v) of a first vehicle (1) travelling in an area (A), the processing circuitry (602) being configured to:
- obtain data about speed (v1, v2, v3, v4) of at least one movable object (MV1-MV4) in the area (A),
- obtain data about a maximum allowed relative speed (v_{max, rel}) between the first vehicle (1) and the at least one movable object (MV1-MV4),
- set a maximum allowed vehicle speed (vₘₐₓ) of the first vehicle (1) based on a difference between the maximum allowed relative speed (v_{max, rel}) and the speed (v1, v2, v3, v4) of the at least one movable object (MV1-MV4), and
- control the vehicle speed (v) of the first vehicle (1) based on the maximum allowed vehicle speed (vₘₐₓ) of the first vehicle (1).

2. The computer system (600) according to claim 1, wherein the processing circuitry (602) is configured to:
- obtain data about respective speeds (v1, v2, v3, v4) of a plurality of movable objects (MV1-MV4) in the area (A), and
- set the maximum allowed vehicle speed (vₘₐₓ) of the first vehicle (1) based on a difference between the maximum allowed relative speed (v_{max, rel}) and a highest speed (max[v1, v2, v3, v4]) of the respective speeds (v1, v2, v3, v4) of the plurality of movable objects (MV1-MV4).

3. The computer system (600) according to any one of the preceding claims, wherein the speed of the at least one movable object (MV1-MV4) is any one of:
- an actual speed of the at least one movable object (MV1-MV4),
- a maximum speed of the at least one movable object (MV1-MV4), and
- a maximum allowed speed of the at least one movable object (MV1-MV4).

4. The computer system (600) according to any one of the preceding claims, wherein the processing circuitry (602) is configured to set the maximum allowed relative speed (v_{max, rel}) between the first vehicle (1) and the at least one movable object (MV1-MV4) based on any one or a combination of:
- an obstacle detection capacity of an object detection sensor (2) of the first vehicle (1),
- a braking capacity of the first vehicle (1),
- a braking capacity of the at least one movable object (MV1-MV4),
- a road condition of a travelling surface in the area (A),
- a road inclination of a travelling surface in the area (A),
- a weather condition in the area (A),
- a distance between the first vehicle (1) and a nearest movable object (MV1-MV4) of the at least one movable object (MV1-MV4),
- a position of the first vehicle (1) in the area (A), and
- type of movable object(s) of the at least one movable object (MV1-MV4).

5. The computer system (600) according to any one of the preceding claims, wherein the maximum allowed vehicle speed (vₘₐₓ) of the first vehicle (1) is continuously or intermittently updated based on any one or a combination of updated data about speed (v1, v2, v3, v4) of the at least one movable object (MV1-MV4) in the area (A) and updated data about the maximum allowed relative speed (v_{max, rel}) between the first vehicle (1) and the at least one movable object (MV1-MV4).

6. The computer system (600) according to claim 5, wherein the processing circuitry (602) is configured to update the maximum allowed relative speed (v_{max, rel}) between the first vehicle (1) and the at least one movable object (MV1-MV4) based on a change of any one of:
- an obstacle detection capacity of an object detection sensor (2) of the first vehicle (1),
- a braking capacity of the first vehicle (1),
- a braking capacity of the at least one movable object (MV1-MV4),
- a road condition of the travelling surface in the area (A),
- a road inclination of a travelling surface in the area (A),
- a weather condition in the area (A),
- a distance between the first vehicle (1) and the nearest movable object (MV1-MV4) of the at least one movable object (MV1-MV4),
- a position of the first vehicle (1) in the area (A), and
- type of movable object(s) of the at least one movable object (MV1-MV4).

7. The computer system (600) according to any one of the preceding claims, wherein the area (A) comprises a plurality of sub-areas (A1-A4), and wherein the processing circuitry (602) is configured to set the maximum allowed relative speed (v_{max, rel}) between the first vehicle (1) and the at least one movable object (MV1-MV4) based on in which sub-area (A1-A4) the first vehicle (1) is currently travelling.

8. The computer system (600) according to any one of the preceding claims, wherein the processing circuitry (602) is further configured to set the maximum allowed vehicle speed (vₘₐₓ) of the first vehicle (1) based on at least one of a travelling direction of the first vehicle (1) and a travelling direction of the at least one movable object (MV1-MV4).

9. The computer system (600) according to any one of the preceding claims, wherein the first vehicle (1) is an autonomous vehicle.

10. The computer system (600) according to any one of the preceding claims, wherein the processing circuitry (602) is further configured to control the vehicle speed (v) of the first vehicle (1) so that the vehicle speed (v) of the first vehicle (1) is equal to or below the maximum allowed vehicle speed (vₘₐₓ).

11. The computer system (600) according to any one of the preceding claims, wherein the processing circuitry (602) is further configured to:
- in response to determining that the area (A) is free from the at least one movable object (MV1-MV4), set the maximum allowed vehicle speed (vₘₐₓ) of the first vehicle (1) to the maximum allowed relative speed (v_{max, rel}).

12. A computer-implemented method for controlling vehicle speed (v) of a first vehicle (1) travelling in an area (A), comprising:
- obtaining (S1), by processing circuitry (602) of a computer system (600), data about speed (v1, v2, v3, v4) of at least one movable object (MV1-MV4) in the area (A),
- obtaining (S2), by the processing circuitry (602), data about a maximum allowed relative speed (v_{max, rel}) between the first vehicle (1) and the at least one movable object (MV1-MV4),
- setting (S3), by the processing circuitry (602), a maximum allowed vehicle speed (vₘₐₓ) of the first vehicle (1) based on a difference between the maximum allowed relative speed (v_{max, rel}) and the speed (v1, v2, v3, v4) of the at least one movable object (MV1-MV4), and
- controlling (S4), by the processing circuitry (602), the vehicle speed (v) of the first vehicle (1) based on the maximum allowed vehicle speed (vₘₐₓ) of the first vehicle (1).

13. A computer program product comprising program code for performing, when executed by the processing circuitry (602), the method of claim 12.

14. A non-transitory computer-readable storage medium comprising instructions, which when executed by the processing circuitry (602), cause the processing circuitry to perform the method of claim 12.

15. A vehicle (1) comprising a computer system (600) according to any one of claims 1-11.
